Europäisches Patentamt

European Patent Office

Office européen des brevets

(19)

(11) Veröffentlichungsnummer: **0 282 952 B1**

# (12) EUROPÄISCHE PATENTSCHRIFT

(45) Veröffentlichungstag der Patentschrift:
20.03.91 Patentblatt 91/12

(51) Int. Cl.⁵: **C08K 3/04, C08L 27/12, B32B 15/08**

(21) Anmeldenummer: **88104023.2**

(22) Anmeldetag: **14.03.88**

(54) **Fluorkunststoffbeschichtung mit Füllstoff Aktivkohle zur Verhinderung der Korrosion.**

(30) Priorität: **17.03.87 DE 3708645**

(43) Veröffentlichungstag der Anmeldung:
**21.09.88 Patentblatt 88/38**

(45) Bekanntmachung des Hinweises auf die
Patenterteilung:
**20.03.91 Patentblatt 91/12**

(84) Benannte Vertragsstaaten:
**AT BE CH DE ES FR GB GR IT LI LU NL SE**

(56) Entgegenhaltungen:
**FR-A- 2 215 710**
**GB-A- 1 340 503**

(73) Patentinhaber: **W.L. Gore & Associates GmbH**
**Hermann-Oberth-Strasse 22**
**W-8011 Putzbrunn (DE)**

(72) Erfinder: **Witzko, Richard**
**Angermühlstrasse 6**
**W-8195 Egling (DE)**

(74) Vertreter: **Klunker . Schmitt-Nilson . Hirsch**
**Winzererstrasse 106**
**W-8000 München 40 (DE)**

EP 0 282 952 B1

## Beschreibung

Die vorliegende Erfindung bezieht sich auf den Schutz von metallischen Oberflächen vor Korrosion durch mehrlagige Beschichtungen mit Fluorkunststoffen.

Fluorkunststoffbeschichtungen als Korrosionsschutz für Behälter und Rohre sind erst seit etwa 15 Jahren entwickelt worden. Diese besitzen hervorragende chemische und physikalische Eigenschaften. Die starke Fluor-Kohlenstoff-Bindung sowie die fast vollständige Abschirmung der Kohlenstoffketten durch die Fluoratome führt zur einer universellen Chemikalienresistenz der Fluorkunststoffe. Zudem zeichnen sich diese durch Temperaturbeständigkeit im Bereich von etwa 150°C bis 300°C aus.

Die Beschichtungen aus diesen Materialien weisen jedoch ein anderes Verhalten auf. Auf Grund des thermoplastischen Charakters besitzen diese Fluorkunststoffe bei erhöhten Temperaturen eine gewisse Durchlässigkeit für Gas- oder Dampfmoleküle. Diese Durchlässigkeit hängt von der Dicke der Schicht sowie von der gegebenen Temperatur ab. Bei zunehmender Schichtdicke vermindert sich die Diffusion, bei steigender Temperatur vergrößert sie sich. Aus diesen Gründen konnte ein dauerhafter Korrosionsschutz durch Beschichtungen mit Fluorkunststoffen bisher nicht verwirklicht werden.

Es wurde bereits vorgeschlagen, eine Barriere in den Beschichtungen einzubauen. Den Versuchen lag der Gedanke zugrunde, durch Einbau von Pigmenten und Füllstoffen den Weg des diffundierenden Materials zur metallischen Oberfläche zu verlängern. Der Schutzeffekt kann verbessert werden, wenn die Zusatzstoffe auf Grund ihrer speziellen Teilchenform (zum Beispiel tafelförmige Pigmentteilchen) und entsprechender Orientierung in der Schicht eine Sperrwirkung bewirken. Solche Zusatzstoffe sind jedoch nicht für Kunststoffbeschichtungen geeignet, da sie chemisch nicht resistent sind. Zudem wird der Diffusionsweg lediglich verlängert, jedoch liegt hierin keine Lösung des Problems die Diffusion zu verhindern. Die Herstellung von größeren Schichtdicken war bisher aus technischen Gründen nicht möglich. Mit den konventionellen Verfahren, Behälter oder Rohre mit einem Korrosionsschutz durch Überzug mit Fluorkunststoffen zu versehen, sind nur Schichtdicken von etwa 0,5 mm erreicht worden, die für einen genügenden Schutz vor Korrosion nicht ausreichen.

Der vorliegenden Erfindung liegt daher die Aufgabe zugrunde, einen dauerhaften Korrosionsschutz für Behälter oder Rohre durch Überzug mit Fluorkunststoffen herzustellen.

Die Aufgabe wird erfindungsgemäß dadurch gelöst, daß eine mehrlagige Beschichtung aus Fluorkunststoffen hergestellt wird und daß wenigstens eine der zwischen der äußeren Deckschicht aus Fluorkunststoff und der metallischen Oberfläche liegenden Schichten einen porösen Füllstoff enthält.

Es hat sich überraschenderweise herausgestellt, daß im Gegensatz zu den bisher verwendeten kompakten, tafelförmigen Füllstoffen ein hochporöses, vermeintlich stark durchlässiges Material wie Aktivkohle als Füllstoff besonders gut geeignet ist, um die Diffusion korrodierend wirkender Gase und Flüssigkeiten zu verhindern. Aktivkohle weist eine ungewöhnlich große innere Oberfläche auf, und ist nahezu universell chemikalienbeständig und hochtemperaturbeständig. Zusätzlich können noch andere Hilfsstoffe in der Fluorkunststoff-Füllstoffschicht verwendet werden, um die Hafteigenschaften zu verbessern.

Die hohe Adsorptionsfähigkeit von Aktivkohle bedingt ein Zurückhalten der Chemikalie und durch die extrem große Oberfläche der Aktivkohle wird der Diffusionsweg für die Chemikalien erheblich verlängert. Zusätzlich wird die Diffusionsgeschwindigkeit durch die Partialdruckänderung des diffundierenden Mediums in den porösen Hohlräumen verlangsamt.

In der vorliegenden Erfindung kann die Menge der Aktivkohle in der Fluorkunststoffschicht variiert werden. Vorzugsweise enthält die Fluorkunststoffschicht 5 und 25 Gewichtsprozent an Aktivkohle. Für eine aus Aktivkohle und Fluorkunststoff bestehende Schicht sind mit den konventionellen Beschichtungsverfahren, Schichtdicken von 0,2 bis etwa 2 mm erreichbar. Es ist zweckmäßig, einen mehrschichtigen Überzug auf der metallischen Oberfläche herzustellen, wobei vorzugsweise eine der zwischen der äußeren Deckschicht aus Fluorkunststoff und der metallischen Oberfläche liegenden Schicht den porösen Füllstoff enthält.

Als Fluorkunststoffe eignen sich Polytetrafluorethylen (PTFE), Perfluoralkoxy (PFA), Perfluorethylenpropylen (FEP), Copolymere aus Ethylen und Tetrafluorethylen (ETFE) oder auch Copolymere aus Ethylen und Chlortrifluorethylen (ECTFE). Vorzugsweise wird in der vorliegenden Erfindung ein Gemisch aus PTFE, PFA und FEP auf die metallische Oberfläche aufgebracht, da PTFE allein eine sehr hohe Schmelzviskosität besitzt und mit diesem nur sehr schwer eine einheitliche Schicht zu erreichen ist. Durch Verwendung des genannten Gemisches werden die Fließeigenschaften verbessert und die Gefahr der Rißbildung verhindert.

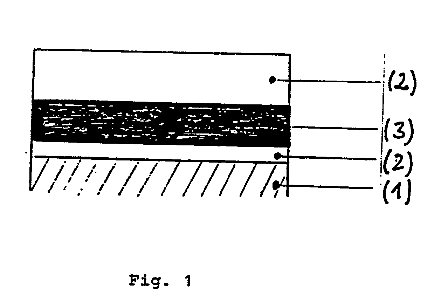

Die vorliegende Erfindung wird anhand des Ausführungsbeispiels in der Zeichnung näher erläutert, ohne darauf beschränkt zu sein.

Gemäß der Figur bietet sich eine dreilagige Beschichtung an. Über der zu schützenden metallischen Oberfläche (1) liegt zunächst eine dünne Schicht (2) aus einem Gemisch von PTFE, PFA und FEP, auf die dann die aus diesem Gemisch und Aktivkohle entstehende Schicht (3) folgt. Der Schichtaufbau wird durch eine weitere Schicht (2) aus dem genannten Gemisch abgeschlossen, um die in die Schicht mit Aktivkohle eindiffundierende Menge des korrodierenden Mediums zu begrenzen. Die dünne Kunststoffschicht, die zwischen der metallischen Oberfläche und der Schicht mit Aktivkohle liegt, ist sinnvoll, da die Hafteigenschaften verbessert werden.

Es wurden Versuche an beschichteten Platten durchgeführt, wobei in einer Versuchsreihe die Beschichtung nur aus dem Gemisch von Fluorkunststoffen (PTFE, PFA, FEP) bestand, und in einer anderen, die in der Beschichtung zusätzlich Aktivkohle enthielt. Die Versuchsbedingungen- und Ergebnisse werden nachfolgend zusammenfaßt.

Beispiel 1 :

Es wurden Tests mit 20%-iger Salzsäure bei einer Temperatur von 145° Celsius und einem Druck von ca. 4,5 bar durchgeführt. Bestand die Beschichtung nur aus PTFE, PFA und FEP, so konnten ein starken Rückgang der Haftung auf dem Metall sowie mittlere Rostbildung nach 24 Stunden beobachtet werden. Die Beschichtung, die zusätzlich noch Aktivkohle enthielt, zeigte auch nach 4 Wochen keine Veränderung.

Beispiel 2 :

Es wurden Tests mit Wasser bei einer Temperatur von 140°C und einem Druck von ca. 4 bar durchgeführt. Die Beschichtung aus PTFE, PFA und FEP auf der metallischen Oberfläche zeigte nach 3 Wochen Blasenbildungen und Enthaftung. Enthielt die Beschichtung zusätzlich noch Aktivkohle, so konnte auch nach 3 Wochen keine Veränderung der Beschichtung festgestellt werden.

**Ansprüche**

1. Mehrlagige Beschichtungen von metallischen Oberflächen mit Fluorkunststoffen zum Schutz vor Korrosion, dadurch **gekennzeichnet**, daß wenigstens eine der zwischen der Deckschicht aus Fluorkunststoff und der metallischen Oberfläche liegenden Schichten zusätzlich Aktivkohle enthält.

2. Mehrlagige Beschichtungen von metallischen Oberflächen nach Anspruch 1, dadurch **gekennzeichnet**, daß der Fluorkunststoff ein Gemisch aus Polytetrafluorethylen (PTFE), und/oder Perfluoralkoxy (PFA) und/oder Perfluorethylenpropylen (FEP) ist.

3. Mehrlagige Beschichtungen von metallischen Oberflächen nach einem der Ansprüche 1 oder 2, dadurch **gekennzeichnet**, daß die Füllungsgrade an der Aktivkohle zwischen 5 und 25 Gewichtsprozent des Fluorkunststoffes betragen.

4. Mehrlagige Beschichtungen von metallischen Oberflächen nach Anspruch 1, dadurch **gekenn-**

**zeichnet**, daß die Beschichtung aus drei übereinander liegenden Schichten besteht.

5. Mehrlagige Beschichtungen von metallischen Oberflächen nach Anspruch 4, dadurch **gekennzeichnet**, daß die Aktivkohle enthaltene Schicht die mittlere der drei Schichten ist.

**Claims**

1. Multi-layer coatings for metallic surfaces with fluoropolymers as protection against corrosion, characterised in that at least one of the layers lying between the fluoropolymer cover layer and the metallic surface additionally contains activated carbon.

2. Multi-layer coatings for metallic surfaces in accordance with Claim 1, characterised in that the fluoropolymer is a mixture of polytetrafluoroethylene (PTFE),and/or perfluoroalkoxy (PFA) and/or perfluoroethylenepropylene (FEP).

3. Multi-layer coatings for metallic surfaces in accordance with one of Claims 1 or 2, characterised in that the filler ratio of activated carbon is between 5 and 25 per cent by weight of the fluoropolymer.

4. Multi-layer coatings for metallic surfaces in accordance with Claim 1, characterised in that the coating comprises three layers lying one on top of the other.

5. Multi-layer coatings for metallic surfaces in accordance with Claim 4, characterised in that the layer containing activated carbon is the middle of the three layers.

**Revendications**

1. Revêtements multicouches de surfaces métalliques par des résines fluorées en guise de protection contre la corrosion, caractérisés en ce qu'au moins une des couches intercalées entre la couche de recouvrement en résine fluorée et la surface métallique contient additionnellement du charbon actif.

2. Revêtements multicouches de surfaces métalliques selon la revendication 1, caractérisés en ce que la résine fluorée est un mélange de polytétrafluoroéthylène (PTFE), et/ou de perfluoroalcoxy (PFA) et/ou de perfluoroéthylènepropylène (FEP).

3. Revêtements multicouches de surfaces métalliques selon l'une des revendications 1 ou 2, caractérisés en ce que les degrés de remplissage en charbon actif sont compris entre 5 et 25% en poids de la résine fluorée.

4. Revêtements multicouches de surfaces métalliques selon la revendication 1, caractérisés en ce que le revêtement se compose de trois couches superposées.

5. Revêtements multicouches de surfaces métalliques selon la revendication 4, caractérisés en ce que la couche contenant du charbon actif est la couche centrale des trois couches.

Fig. 1